# EUROPEAN PATENT APPLICATION

(11) **EP 4 672 124 A1**
(43) Date of publication of application: **31.12.2025**
(21) Application number: 25185183.8
(22) Date of filing: 25.06.2025
(51) Int. Cl.: G06Q 40/04, G06Q 40/06, G06Q 20/20, G06Q 20/22

(54) **A SYSTEM AND METHOD FOR MAKING PAYMENTS WITH SECURITIES**

(30) Priority: 25.06.2024 IL 31391324
(71) Applicant: Nayax Ltd., 4659071 Herzliya (IL)
(72) Inventor: Ben-Avi, David, 470233 Ramat Hasharon (IL); Rosenholz, Guy, 4704233 Ramat Hasharon (IL)
(74) Representative: Schlich

(57) **Abstract**

A system and a method for making payments at a point of sale (POS) is disclosed, involving a computing device with a digital wallet application, a management server administering a client payment account, and a trusted entity server administering a client brokerage account. The method associates the client brokerage and payment accounts with a client and facilitates transactions initiated via a POS payment system. Upon receiving a transaction authorization request, the management server establishes a secure connection with the trusted entity server to retrieve brokerage account data. The server analyzes available securities in the brokerage account and currency balances in the payment account to generate financing suggestions for the transaction, including partial security sales and partial payment from the payment account. The client selects a financing suggestion via the digital wallet application, and the management server instructs the trusted entity server to execute the suggested security sale. The transaction is authorized at the POS using the payment account, and proceeds from the security sale are recovered and applied to the payment account. The disclosed method enables integrated, secure, and flexible financing for point-of-sale transactions.

## Description

### TECHNICAL FIELD

This disclosure generally relates to methods and systems for processing payments. More specifically, to methods and systems for making payments with securities.

### BACKGROUND

Traditionally, in-store payment methods include cash, credit cards, debit cards, or mobile payment apps. These methods require customers to have liquid assets readily available and can be subject to various fees and limitations.

Current payment methods are linked to traditional bank accounts or credit cards, which tie them to the limitations and fees of those systems. Additionally, these methods can impose restrictions on spending limits and fund availability, limiting financial flexibility for consumers.

The existing payment systems do not utilize the potential liquidity of customers' brokerage accounts, which can hold substantial value in the form of securities. These systems fail to provide a seamless and integrated solution that allows customers to leverage their investments for everyday transactions. As a result, consumers are unable to maximize their financial resources efficiently, facing unnecessary constraints and missing opportunities to optimize their spending power.

There is a growing need for a versatile, flexible, and efficient payment solution that would allow customers to use other assets that are normally not immediately available to finance their day-to-day expenses.

### GENERAL DESCRIPTION

### INTRODUCTION

The present invention relates to a method, system, and/or apparatus that allow financing transactions through sale of securities (e.g., stocks, shares, bonds, and the like) administrated by a trusted entity server in real-time.

One exemplary embodiment may include a method for making payment at a point of sale (POS), the method comprising: a computing device (330), comprising a digital wallet application installed thereon and a user interface; a management server (340), configured to administrate a client payment account (345) comprising at least one currency balance (346) securely accessible via said digital wallet application; and a trusted entity server (350), configured to administrate a client brokerage account (355) comprising an at least one security (356); wherein the client brokerage account and the client payment account are associated with a client (320) and the management server is configured to: receive a request to authorize a transaction of the client initiated at a POS payment system (310) via the computing device; initiate a secure connection with the trusted entity server; retrieve data (361) pertaining to the client brokerage account from the trusted entity server performing an analysis of at least one brokerage account associated with said client; formulate at least one financing suggestion for financing the transaction by at least one of partial sale of the at least one security in the brokerage account and partial payment using the at least one currency in the client payment account; obtain confirmation of one of the at least one financing suggestion, being a confirmed financing suggestion, from the client via the user interface; issue an instruction (362) to the trusted entity server to perform a sale of the at least one security in the client brokerage account according to the confirmed financing suggestion; transmitting an authorization of said transaction to said POS payment system, to be initially paid by the client payment account; and recover (363) from the trusted entity server the proceeds from the sale of the at least one security according to the selected financing suggestion, and apply the proceeds to the client payment account.

The present invention addresses the limitations of the prior art by providing a comprehensive and flexible system for in-store payment using stocks, different stock types, and fractional shares.

### TERMS AND GENERAL COMMENTS

To ensure clear understanding and consistency, this sub-chapter defines key terms used throughout the patent.

The terms "plurality" and "a plurality," as used herein, include, for example, "multiple" or "two or more". For example, "a plurality of items" includes two or more items.

References to "one embodiment", "an embodiment", "demonstrative embodiment", "various embodiments", etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

The term "security" and/or "securities" as used hereinbelow, refers to a tradable document representing a financial asset. This document holds value and can be bought and sold in financial markets. For example, this document may include stocks, shares, bonds, stock funds, mutual funds and the like, as well as stock market indexes such as S&P 500, Dow Jones Industrial Average or FTSE 100. Securities may be traded on stock exchanges like the NYSE and Nasdaq.

The term "Equity securities," as used hereinbelow, refers to documents representing ownership in a company, commonly referred to as stocks or shares.

The term "Debt securities," as used hereinbelow, refers to documents representing essentially loans to an entity, like a company or government, that pay you back with interest over time, such as bonds.

The term "Derivatives," as used hereinbelow, refers to documents representing financial contracts that derive their value from other underlying assets, like stocks, bonds, currencies, or commodities.

### EMBODIMENTS OF THE PRESENT INVENTION

The method facilitates payment transactions at a point of sale (POS) by integrating a mobile computing device, a management server, and a trusted entity server. The method ensures seamless execution of transactions by leveraging securities from the client's brokerage account to finance the payment. This approach optimizes financial management while enabling real-time transaction authorization.

**System Components:**
[a] **Mobile Computing Device:** The mobile computing device, equipped with a digital wallet application and user interface, serves as the client's primary interaction point. The digital wallet securely connects to the management server to initiate and authorize payment transactions.
[b] **Management Server:** The management server administers the client's payment account, maintaining a secure balance of at least one currency. It also analyzes the client's brokerage account, formulates financing suggestions, and coordinates the execution of security sales to fund transactions.
[c] **Trusted Entity Server:** The trusted entity server is responsible for managing the client's brokerage account, which includes securities such as stocks, bonds, or other financial assets. It executes the sale of securities based on instructions from the management server.

**Operation of the Preferred Embodiment:**
[a] **Transaction Initiation:** The process starts when the client initiates a payment at a POS system using the digital wallet application installed on their mobile device. The digital wallet sends a transaction authorization request to the management server. **Example 1:** A customer scans a QR code displayed on a POS terminal in a retail store, initiating a payment request for $500 through their digital wallet. **Example 2**: The customer attempts to purchase a product using a traditional EMV payment system. They insert their mobile device into the EMV reader or use NFC functionality to simulate a credit card transaction. The EMV system processes the payment request as if it were a standard credit card transaction and forwards it to the management server for authorization and financing.
   This flexibility ensures compatibility with both modern digital payment systems and traditional credit card processing, allowing clients to seamlessly integrate innovative financing methods with established payment infrastructures.
[b] **Analysis of Brokerage Account:** Upon receiving the request, the management server identifies the client's brokerage account and performs an analysis of the securities. This includes evaluating their current market value, historical trends, and potential future value changes. **Example**: The management server identifies that the client's brokerage account holds shares of Company X and Company Y. Company X's shares are projected to decrease in value, making them a priority for sale. **Example 2**: The management server has secure access to the client's brokerage account, allowing it to evaluate all the assets within the account. It identifies a portfolio containing a mix of stocks, bonds, and other securities. The management server analyzes the performance of each asset, looking for trends such as a decline in stock prices or a drop in bond yields, and makes informed decisions on which assets should be liquidated to finance the POS transaction. By having direct access to the client's brokerage account, the management server ensures that the most relevant and timely data is used in formulating the financing suggestion, optimizing the sale of securities for the transaction.
[c] **Formulating Financing Suggestions:** The management server formulates a financing suggestion, for example, by selecting securities whose value is estimated to decline. Alternatively, if no securities in the client brokerage account are estimated to have drop in value, the financing suggestion may include only one or more currencies in the client's payment account. This ensures the transaction is funded with minimal financial loss to the client. **Example:** To cover the $500 payment, the management server suggests selling 10 shares of Company X, valued at $50 each, which are likely to depreciate further.
[d] **Issuing Sale Instructions:** Based on the financing suggestion, the management server sends a secure instruction to the trusted entity server to execute the sale of the identified securities. The trusted entity server then processes the sale and obtains the proceeds from the sale of securities. These proceeds are later recovered by the management server and applied to the client payment account.
   **Example 1:** The management server analyzes the client's brokerage account and determines that selling 10 shares of Company X would generate enough funds for the transaction. Upon the client's approval of the financing suggestion, the management server securely transmits an encrypted instruction to the trusted entity server to proceed with the sale of the shares.
   **Example 2:** Upon receiving the client's approval, the management server can initiate the sale of specific securities by sending a digitally signed message to the trusted entity server. This message contains the details of the securities to be sold, including the quantity and price. For instance, the management server instructs the trusted entity server to sell 100 shares of Company Y at the current market price. Once the sale is processed, the proceeds are transferred directly to the client's digital wallet, where they are made available for use in the POS transaction or to the management server's account to facilitate the funding of the transaction.
[e] **Example 3:** In a scenario where the client holds both stocks and other assets, the management server might select a combination of securities, such as 5 shares of Company X and 20 bonds, based on their projected value fluctuations. After the client accepts the financing suggestion, the management server securely instructs the trusted entity server to sell the selected securities. The proceeds are then transferred to the client's payment account, allowing them to complete the payment at the POS or to the management server's account to facilitate the funding of the transaction.
[f] **Transaction Authorization:** After the proceeds are transferred, the management server authorizes the transaction and sends confirmation to the POS system. The POS system completes the transaction, and the client is notified via the digital wallet application.
   **Example 1:** The POS terminal displays "Payment Approved," and the client receives a digital receipt confirming the $500 payment.
   **Example 2:** Upon authorization of the transaction, the management server issues a preloaded credit card number to the client's mobile computing device. The credit card is loaded with the exact amount needed to finance the transaction. The client then uses the preloaded credit card to complete the payment process at the POS system. For example, the client's mobile wallet displays a new credit card with a $500 balance, and the POS system processes the payment using this newly generated card number. The transaction is completed, and the client receives a digital receipt confirming the payment.

**Advanced Features of the System:**
[a] **Dynamic Market Analysis:** The management server analyzes market trends and evaluates the performance of securities in real-time, ensuring the optimal timing of the sale to maximize client benefits.
[b] **Future Value Prediction:** The server considers potential changes in the value of securities, prioritizing those expected to decrease in value for sale.
[c] **Cost Minimization:** The system calculates transaction costs, such as brokerage fees, and adjusts financing suggestions to minimize these expenses.
[d] **Personalized Suggestions:** By using artificial intelligence, the management server generates financing strategies tailored to the client's historical financial behavior and market trends.

**Applications and Benefits:**
[a] The system provides a seamless, automated process for financing payments using securities, eliminating the need for manual intervention by the client.
[b] Real-time analysis and decision-making ensure optimal utilization of the client's financial assets.
[c] The method enhances the flexibility of payment options at the POS, offering a unique solution that combines securities with traditional payment methods.

This technical approach creates an innovative and efficient mechanism for financing transactions, offering clients a secure, optimized, and user-friendly payment experience.

Any one or more of the following features, designs, and configurations can be incorporated in the invention detailed herein, independently or in combination therewith:

In an embodiment of the present invention, said management server, when formulating said at least one financing suggestion, is configured to consider at least change in value of at least one of said at least one security in said brokerage account over time, estimate a potential change in the current value of said at least one security in said brokerage account, and include in said at least one financing suggestion at least one of said at least one security whose value is estimated to decrease

An embodiment of the present invention relates to a method for making payment at a point of sale (POS) performed by a management server. For example, the management server may obtain a confirmation from said client to finance said transaction according to said least one financing suggestion.

For example, the management server may allow said client to finance said transaction in part by said sale of said at least one security, and to pay a remaining amount of said transaction with at least one payment method associated with said client.

For example, said sale of said at least one security may comprise the sale of fractional securities.

For example, said management server, when formulating said at least one financing suggestion, may be configured to consider at least one of the following: total current value of said at least one brokerage account, current value of each of the at least one security in said at least one brokerage account, type of each of the at least one security, taxes imposed on sale of the at least one security, amount of said transaction, available amount in any other payment method and account associated with said client.

For example, said sale of securities may be performed after the completion of said transaction, and an amount corresponding to the expected proceeds from said sale of securities is assigned to said client as temporary credit to facilitate completion of said transaction.

In some embodiments, the method may comprise a user interface on a computing device in communication with said management server via a network.

For example, said at least one financing suggestion may be presented to said client via said user interface.

For example, the current value and change in value over time of said at least one security included in said at least one financing suggestion may be presented to said client via said user interface.

For example, said user interface may allow said client to change the composition of said at least one security to be sold in said at least one financing suggestion.

For example, said management server may be configured to estimate a potential change in the current value of said securities in said brokerage account, and include in said at least one financing suggestion at least one of said securities whose value is estimated to decrease.

For example, said user interface may be provided via a software application installed on said computing device.

For example, said management server is configured to receive a set of rules from said trusted entity server applying to said sale of said at least one security; and wherein said management server is configured to formulate said at least one financing suggestion in accordance with said set of rules.

Another demonstrative embodiment may include a system for making payment at a point of sale (POS) comprising a computing device, comprising a digital wallet application installed thereon and a user interface; a management server, configured to administrate a client payment account comprising at least one currency balance (346) securely accessible via said digital wallet application; and a trusted entity server, configured to administrate a client brokerage account comprising an at least one security; wherein the client brokerage account and the client payment account are associated with a client and the management server is configured to: receive a request to authorize a transaction of the client initiated at the POS payment system via said mobile computing device; initiate a secure connection with the trusted entity server; retrieve data pertaining to the client brokerage account from the trusted entity server; perform an analysis of the at least one security in the brokerage account and the at least one currency in the client payment account; formulate at least one financing suggestion for financing the transaction by at least one of partial sale of the at least one security in the client in the brokerage account and partial payment using the at least one currency in the client payment account; obtain confirmation of one of the at least one financing suggestion, being a confirmed financing suggestion, from the client via the user interface; issue an instruction to the trusted entity server to perform a sale the at least one security in the client brokerage account according to said confirmed financing suggestion; transmit an authorization of said transaction to said POS payment system, to be initially paid by the client payment account; recover from the trusted entity server the proceeds from the sale of the at least one security according to the selected financing suggestion, and apply the proceeds to the client payment account.

According to another embodiment, said management server, when performing said analysis, is configured to consider at least change in value of said at least one security over time, estimate a potential change in the current value of said at least one security, and include in said at least one financing suggestion at least one of said at least one security whose value is estimated to decrease; and wherein said at least one financing suggestion is presented to and confirmed by said client via said user interface

In some embodiments, the management server may be configured to obtain a confirmation from said client to finance said transaction according to said least one financing suggestion.

For example, said management server may be configured to: allows said client to finance said transaction in part by said sale of said at least one security; and pay the remaining amount of said transaction with at least one payment method associated with said client.

For example, said sale of said at least one security may comprise the sale of fractional securities.

For example, said management server, when formulating said at least one financing suggestion, may be configured to consider at least one of the following: total current value of said at least one brokerage account, current value of each of the at least one security in said at least one brokerage account, type of each of the at least one security, change in value of each of the at least one security over time, taxes imposed on sale of the at least one security, amount of said transaction, available amount in any other payment method and account associated with said client.

In some embodiments, the system may comprise a user interface operably coupled to a computing device, which is in communication with said management server via a network.

For example, said at least one financing suggestion may be presented to said client via said user interface.

For example, current value and change in value over time of said at least one security included in said at least one financing suggestion may be presented to said client via said user interface.

For example, said user interface may allow said client to change the composition of said at least one security to be sold in said at least one financing suggestion.

For example, said management server may be configured to estimate a potential deviation in the current value of said at least one security in said brokerage account, and include in said at least one financing suggestion at least one of said at least one security whose value is estimated to decrease.

For example, said user interface may be provided via a software application installed on said computing device.

For example, said management server is configured to receive a set of rules from the trusted entity server applying to said sale of said securities, and wherein said management server is configured to formulate said at least one financing suggestion in accordance with said set of rules.

In another embodiment of the present invention, the payment process for paying with one or more securities may carried out according to the following steps:
[a] **Checkout:** The customer requests to pay for products or services at an in-store payment terminal, online checkout page or through a mobile app.
[b] **Customer's Decision to Pay with Securities:** when requesting the customer's payment method, the customer selects, for example, the "Pay with Securities" option.
[c] **Purchase Request Transmission:** The payment device (payment terminal, online payment web platform, or an application on a customer's device) sends a purchase request to a remote server over a network. This request may include the transaction amount, other information about the transaction (merchant, products, date and time, original currency), the customer's account details, and the desired payment method (e.g., securities) stocks.
[d] **Securities Value Verification:** The server receives the purchase request and retrieves real-time market data for the securities selected by the customer, or, alternatively, analyzes securities in the customer's brokerage account. The server may calculate the current value of the securities, their change in value over time, expected change in value, payable fees and taxes associated with the sale of the securities, and the number of securities that need to be sold in order to finance the transaction.
[e] **Offer Presentation to Customer:** The server generates at least one financing suggestion and presents it to the customer, specifying the number and type of securities in the customer's brokerage account that may be used to finance the transaction. The suggestion may also include additional information, such as, for example, estimated transaction fees and potential savings compared to traditional payment methods.
[f] **Customer Acceptance of Offer**: The customer reviews the suggestion and decides whether to accept or decline it. If the customer accepts, they confirm the transaction by providing their digital signature or other authentication method.
[g] **Securities Sale by Server**: Upon obtaining the customer's confirmation, the server initiates a sale of the securities in the customer's brokerage account as specified in the financing suggestion. The customer's brokerage account may be managed by the organization that operates the payment method, or by a third party (e.g. broker, investment bank). For example, if the same organization manages the customer's brokerage account, it may buy the securities back from the customer and use the proceeds payable to the customer to pay for the transaction. If the customer's brokerage account is managed by a third party, the server may issue a request to the organization that manages the customer's brokerage account to execute the sale of securities on behalf of the customer. It will be understood that different entities may be required to be involved in the sale of securities and clearance of the transaction, such as a payment facilitator (through which the customer completes the transaction), a third-party broker (managing the customer's brokerage account), a credit card company, a bank and a clearance company. For example, the payment facilitator may instruct a customer's bank to temporarily allocate funds in the customer's bank account, or occupy a customer's credit card limit for bridging the financing of the transaction until the sale of securities is completed.
[h] **Product Purchase Funding:** Using the funds obtained or expected to be obtained from the sale of securities, the server completes the payment for the transaction on behalf of the customer. The payment is made to the store's account or payment processor.
[i] **Transaction Confirmation:** The customer and store receive confirmation of the successful transaction, including details such as the purchased product, the number of shares used, and the transaction amount.

The present invention represents a significant advancement in in-store payments and has the potential to revolutionize the way people, customers, and shoppers pay for goods and services.

Benefits of the present invention:
[a] Offers a convenient and secure payment option for customers.
[b] Provides businesses with a new source of capital and customer engagement.
[c] Promotes financial inclusion by making stock ownership more accessible.

Some advantages of using securities for making payments may include:
[a] Enhanced financial control: Allows customers to have easy access to all their assets, increasing their control over their investment portfolios and simplifying the use of all their available assets in their day-to-day purchases.
[b] Direct Investment: This provides businesses with a direct investment opportunity, allowing them to raise capital and build relationships with customers.
[c] Reduced Transaction Fees: Potentially eliminates transaction fees associated with traditional payment methods.
[d] Increased Accessibility: Offers a payment option for customers who may not have access to traditional banking services or credit.
[e] Types of securities that may be used for financing transactions may include stocks, Equity securities (representing ownership in a company, for example, common stock), and Debt securities which are essentially loans to an entity (government or corporation) that issues the security, for example, bonds, Exchange-Traded Funds (ETFs), Track a basket of securities and offer diversification benefits, and Derivatives which are Financial instruments that derive their value from an underlying asset, e.g., a stock and/or a share.

Fractional Shares may also be used for financing transactions, combining the value of multiple fractional shares to provide more flexibility in payments.

Security Considerations:
[a] Secure authentication and authorization mechanisms are crucial to protect customer accounts and prevent unauthorized access.
[b] Data encryption and secure communication protocols are necessary to safeguard sensitive financial information during the transaction process.
[c] Compliance with relevant regulations, such as those governing securities trading and anti-money laundering, is essential.
[d] The proposed patent presents a novel and innovative approach to in-store payments by leveraging the value of stocks. By offering customers a convenient, secure, and potentially cost-effective payment option, this system has the potential to revolutionize the retail industry and empower consumers with greater control over their finances.

In an alternative embodiment, the management server is configured to analyze market trends in real-time, including fluctuations in security prices, to optimize the timing of securities sales. This approach maximizes financial benefits for the client while minimizing transaction costs, providing an efficient and dynamic method for managing financial transactions.

In another embodiment, the management server aggregates securities from multiple brokerage accounts associated with the client to formulate a consolidated financing suggestion. This configuration simplifies the transaction process, offering a unified strategy for utilizing assets from various accounts efficiently.

In yet another embodiment, the management server integrates external data sources, such as geopolitical events or economic indicators, to refine the financing suggestion. By incorporating real-world factors, the system ensures that financing decisions are contextually informed and strategically aligned with market conditions.

In an additional embodiment, the management server analyzes market liquidity for specific securities before executing the sale. This analysis prevents significant price drops by ensuring that sales are conducted in a manner that preserves market stability and optimizes client outcomes.

In a further embodiment, the management server performs real-time performance analysis of the securities being sold, including trade execution time, price fluctuations during the transaction, and market response. This feature enhances the system's precision by enabling continuous monitoring and adjustment throughout the transaction process.

In a sophisticated embodiment, the management server incorporates a volatility prediction algorithm to estimate future price fluctuations of securities prior to executing the sale. This predictive capability allows for proactive decision-making that mitigates risks and enhances profitability.

In another innovative embodiment, the management server dynamically calculates transaction costs, including brokerage fees and potential penalties, and adjusts the financing suggestion accordingly. This ensures that the transaction is not only optimized for profitability but also executed cost-effectively.

In another embodiment, said management server, when performing said analysis, is configured to consider at least one of to the value of the at least one currency in the client payment account and change in the value of the at least one currency in the client payment account.

In another embodiment, said management server, when formulating said analysis, is configured to consider at least change in value of at least one of said at least one currency in said client payment account over time, estimate a potential change in the current value of said at least one currency in said payment account, and include in said at least one financing suggestion at least one of said at least one currency whose value is estimated to decrease.

In a personalized embodiment, the management server utilizes an artificial intelligence engine to create financing suggestions tailored to the client's historical transaction data and current market trends. This AI-driven approach delivers recommendations uniquely suited to the client's financial profile and objectives, enhancing user satisfaction and transaction outcomes.

In an alternative embodiment, the system is configured to enable financing of the transaction using a combination of securities and additional assets of value. The management server analyzes the client's available resources, such as funds in a bank account, credit card balances, cryptocurrency holdings, or other liquid assets, in conjunction with securities from one or more brokerage accounts. The system dynamically formulates a hybrid financing suggestion, allocating portions of the transaction cost to be covered by the sale of securities and the remaining balance by other assets. For example, the system may recommend selling a portion of securities to cover part of the transaction while utilizing funds from a linked bank account or cryptocurrency wallet to complete the payment. This configuration provides enhanced flexibility and ensures the client can efficiently utilize all available resources to fund the transaction while optimizing financial outcomes.

### IN CONCLUSION

Various objects, features, and aspects of the present invention will become more apparent from the following detailed description of preferred embodiments of the invention, along with the accompanying drawings in which numerals represent like components.

### BRIEF DESCRIPTION OF THE DRAWINGS

The disclosure can be more fully appreciated in connection with the following detailed description, taken in conjunction with the accompanying drawings, in which:
Figure 1 is an illustration of a system for making payments at the point of sale (POS) according to some demonstrative embodiments.
Figure 2 is an illustration of a flow chart of a method of making payments, according to some demonstrative embodiments.
Figure 3 is an illustration of a system for making payments at a point of sale.
Figure 4 is an illustration of a method for making payments at a point of sale.

### DETAILED DESCRIPTION OF THE DRAWINGS

### GENERAL COMMENTS

The present invention will be understood from the following detailed description of some demonstrative embodiments, which are meant to be descriptive and not limiting. For the sake of brevity, some well-known features, methods, systems, procedures, components, and so on, are not described in detail.

### DESCRIPTION OF THE DRAWINGS

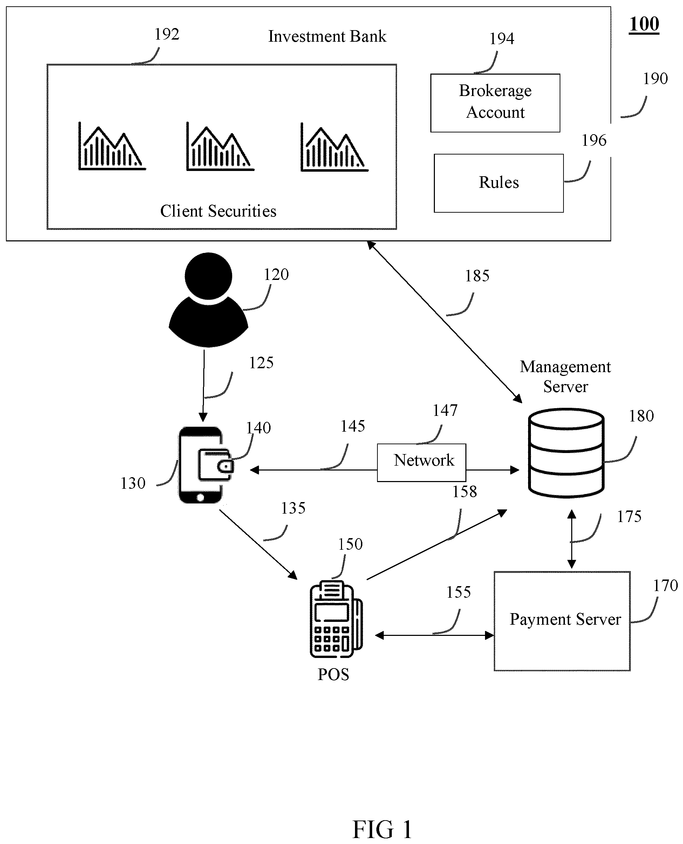

Turning first to Figure 1, which is an illustration of a system 100 for making payments at a point of sale (POS) 150 according to some demonstrative embodiments.

In some demonstrative embodiments, system 100 may include a computing device 130 of a customer 120 having a user interface of a software application 140, point of sale and/or a point-of-sale system 150, a payment server 170, a management server 180, and a trusted entity 190, such as, for example, an investment bank.

For example, computing device 130 may include a desktop computer, a laptop computer, a tablet, a mobile phone, and any other computing device that is configured to run software applications or an internet browser to purchase goods and services at POS 150 over a network 147.

In some demonstrative embodiments, the application 140 may include a digital wallet that can facilitate payment for transactions by means of a payment card and through sale of securities in the customer's brokerage account 192 by using the proceeds from the sale of the securities to pay for the purchase of goods and services.

In some demonstrative embodiments, POS system 150 may include a cash register, a POS computer, a POS manager software running on the POS computer, a payment terminal, a network, and the like. It should be understood that the POS system 150 may be referred to as a POS 150.

In some demonstrative embodiments, payment server 170, may be configured to have access to, for example, a bank account of user 120. The payment server 170 may be operated by a credit card issuer, may include a database of accounts of users and may be configured to approve and transfer payment to POS 150 based on a predefined set of rules.

For example, the set of rules may include a user account balance, a credit card limit, a validation check of the credit card, a fraud check, etc.

In some demonstrative embodiments, trusted entity 190, for example, an investment bank, may include clients' securities 192 and a brokerage account 194 to keep and manage the clients' securities according to a set of rules 196. For example, the rules may include the brokerage account terms and conditions, order types may include market orders and limit orders, where each order type may have specific rules, rules for charging commissions or fees for buying and selling securities, rules for tax implications, etc.

In some demonstrative embodiments, management server 180 may include a database of clients having payment cards that may have been issued by the credit card issuer that operates management server 180 and/or payment server 170.

In some demonstrative embodiments, the client/user 120 may request to complete a transaction at POS 150 by the sale of securities in the customer's brokerage account 194. For example, the management server 180 may perform an analysis of at least one brokerage account 194 associated with client 120, and formulate at least one financing suggestion for the sale of securities in said at least one brokerage account to finance the transaction. For example, the financing suggestion may include the name of a security, its current market value, the amount of said security in the customer's account, and the type of sale order.

In some demonstrative embodiments, management server 180 may be configured to issue an instruction to perform a sale of securities 192 in of brokerage account 194 according to a financing suggestion (shown by line 185) and may transmit an authorization of said transaction to POS payment system 150 (shown by lines 155 and 158), for example, the transaction may be financed by the sale of securities 192.

It would be appreciated if management server 180 may instruct payment server 170 to complete the transaction before sale of securities was executed, and use funds from another source to bridge the transaction until the proceeds from sale of securities are obtained.

In some demonstrative embodiments, management server 180 may be configured to obtain a confirmation from client 120 to finance the transaction, for example, according to the financing suggestion.

In some demonstrative embodiments, management server 180 may be configured to allow client 120 to finance the transaction in part through the sale of securities and pay the remaining amount of the transaction with at least one payment method associated with said client. For example, the payment method may include cash, paying with a credit and/or debit card, making a bank transfer from one of his accounts to another, paying in cheque, and the like.

For example, the sale of securities may include the sale of fractional securities, e.g., fractional share units.

In some demonstrative embodiments, when formulating the financing suggestion, management server 180 may be configured to consider at least one of the following: total current value of brokerage account 194, current value of each of the securities 192 in brokerage account 194, type of each of the securities 192, e.g., stock, bond, etc., change in value of each of the securities over time, taxes imposed on sale of securities, amount of the transaction, available amount in any other payment method and account associated with client 120.

For example, securities may be sold after the transaction is completed, and an amount corresponding to the expected proceeds from the sale may be assigned to the client 120 account as a temporary credit to facilitate the transaction.

In some demonstrative embodiments, a user interface 140, e.g., an application, may be operably coupled to computing device 130. For example, the computing device 130 may be configured to be in communication with management server 180 via network 147. For example, network 147 may include, a local area network (LAN), a wireless LAN (WLAN), a cellular network, a satellite network, a direct communication, or the like

For example, user interface 140 may be provided via a software application installed on said computing device 130.

For example, the user interface 140 may present at least one financing suggestion to client 120.

For example, the current value of the securities and/or change in value over time may be included in the at least one financing suggestion may be presented to client 120 via user interface 140.

For example, user interface 140 may be configured to allow client 120 to change the composition of the securities to be sold in the financing suggestion.

In some demonstrative embodiments, management server 180 may be configured to estimate a potential change in the current value of said securities in said brokerage account, and may include in at least one financing suggestion at least one of said securities whose value is estimated to decrease.

In some demonstrative embodiments, the management server 180 may be configured to be in communication with at least one trusted entity 190, e.g., investment bank, associated with said at least one brokerage account 194 and configured to receive a set of rules 196 from each of said at least one trusted entity 190 applying to said sale of said securities. The management server 1880 may be configured to formulate at least one financing suggestion in accordance with said set of rules 196.

In operation, the customer may initiate a payment process by selecting, for example, the "Pay with Stocks" option at the in-store payment terminal or through a mobile app, e.g., user interface 140. The customer, e.g., client 120, may browse the available products and may select the item they wish to purchase. The customer's device e.g., payment terminal and/or mobile app 140, may send a purchase request to a remote server, e.g. management server 180. The request may include information about the selected product, the customer's account details, and the desired payment method e.g., payment with stocks.

The server, e.g., management server 180, may receive the purchase request and retrieve real-time market data for the stocks selected by the customer, e.g., client 120. The server calculates the current value of the stocks based on the market price and the number of shares the customer intends to use.

The server, e.g., the management server 180, may generate an offer for the customer, specifying the number of shares required to complete the purchase based on the product's price and the current stock value. The offer may also include additional information, such as estimated transaction fees and potential savings compared to traditional payment methods. The customer may review the offer and decide whether to accept or decline the offer. If the customer accepts, the server may confirm the transaction by providing their digital signature or other authentication method.

Upon customer acceptance, the entity operating the management server 180 may act as a buyer and purchase the required number of shares from the customer's brokerage account 194. The transaction may be executed at the current market price, and the shares are transferred from the customer's portfolio to the entity's custody.

Using the funds obtained from the stock purchase, the server completes the payment for the selected product on behalf of the customer. The payment is made to the store's account or payment processor, e.g., a payment terminal at POS 150. The customer and store, e.g. POS 150, may receive confirmation of the successful transaction, including details such as the purchased product, the number of shares used, and the transaction amount.

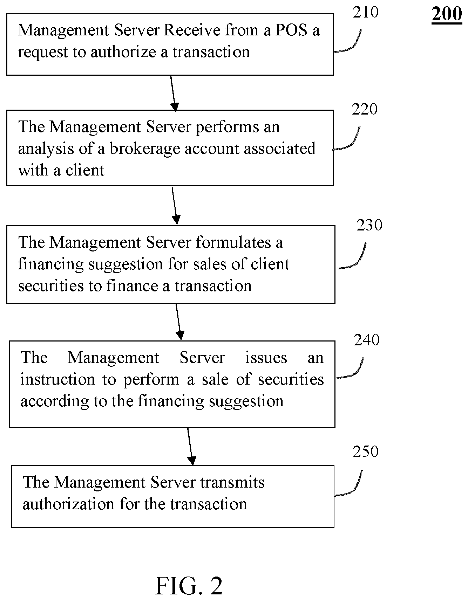

Reference is now made to Figure 2 which is an illustration of a flow chart of a method of making payments 200, according to some demonstrative embodiments.

The method for making payments 200 at POS, e.g., POS 150 (Figure 1), may be performed by a management server 180 (Figure 1). The method starts by receiving a request to authorize a transaction of a client initiated at a POS payment system (text box 210).

In response to the request, the management server 180 may perform an analysis of at least one brokerage account 192 associated with client 120 (text box 220). For example, the analysis may include an overview of the securities of the client and decide which one of the securities may be a candidate for sale based on predetermined consideration. For example, the consideration may include, but is not limited to, an analyst forecast, stock market forecast, price target, stock price, company fundamentals, portfolio rebalancing, and the like.

The management server 180 may formulate at least one financing suggestion for the sale of the securities to finance a transaction (text box 230), and upon receiving the client's confirmation, may issue an instruction to perform a sale of securities in said at least one brokerage account according to said least one financing suggestion (text box 240), and transmit an authorization of the transaction to the POS payment system 150, where the transaction is to be financed by said sale of securities (text box 250).

Furthermore, the management server 180 may obtain a confirmation from said client to finance the transaction according to the financing suggestion.

For example, the management server 180 may allow the client to finance the transaction in part by said sale of securities, and to pay a remaining amount of the transaction with at least one payment method associated with the client, e.g., bank transfer, credit card, etc.

For example, the sale of securities may include the sale of fractional securities.

In some demonstrative embodiments, when formulating at least one financing suggestion (as shown in text box 230), the management server 180 may be configured to consider at least one of the following: the total current value of said at least one brokerage account, current value of each of the securities in said at least one brokerage account, type of each of the securities, change in value of each of the securities over time, taxes imposed on sale of securities, amount of said transaction, available amount in any other payment method and account associated with said client.

In some demonstrative embodiments, as shown in text box 240, the sale of securities may be performed after completion of the transaction, and an amount corresponding to the expected proceeds from the sale of securities is assigned to client 120 as temporary credit to facilitate completion of the transaction. For example, the current value and change in value over time of the securities may be included in the financing suggestion and may be presented to the client 120 a user interface 140 (Figure 1).

In some demonstrative embodiments, the management server may be configured to estimate a potential change in the current value of the securities 192 in the brokerage account 194 and may be included in the financing suggestion a security whose value is estimated to decrease.

In some demonstrative embodiments, the management server 180 may be in communication with the trusted entity 190, e.g., an investment bank, associated with the brokerage account of the client and configured to receive a set of rules from the trusted entity 190 applying to the sale of said securities; and may be configured to formulate said at least one financing suggestion in accordance with said set of rules (text box 230).

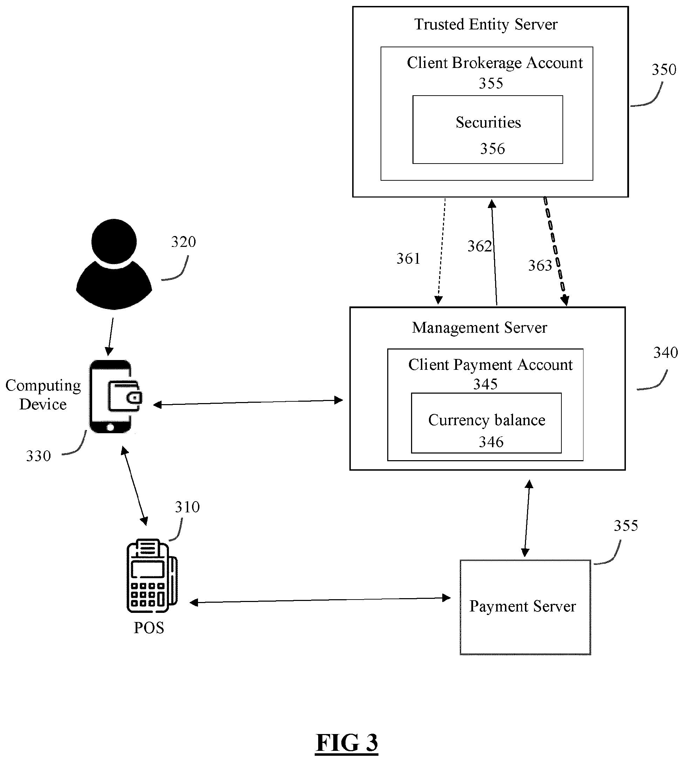

Referring to Figure 3, a system for making payments at a point of sale is illustrated. The system comprising: a computing device (330), comprising a digital wallet application installed thereon and a user interface; a management server (340), configured to administrate a client payment account (345) comprising at least one currency balance (346) securely accessible via said digital wallet application; and a trusted entity server (350), configured to administrate a client brokerage account (355) comprising an at least one security (356). The client brokerage account and the client payment account are associated with a client (120). Management server (340) is configured to: receive a request to authorize a transaction of the client (320) initiated at the POS payment system (310) via the computing device (330). The management server (340) then initiates a secure connection with the trusted entity server (350) and retrieves data (361) pertaining to the client brokerage account (355) from the trusted entity server (350). Using this data (361), the management server (340) performs an analysis of the securities (356) in the client brokerage account (355) and the currency balance (346) in the client payment account (345), and formulates at least one financing suggestion for financing the transaction by at least one of partial sale of at least one security (356) in the client brokerage account (355) and partial payment using the at least one currency balance (346) in the client payment account (345). The management server (340) then obtains confirmation of one of the at least one financing suggestion, being a confirmed financing suggestion, from the client via the user interface of the computing device (330), issues an instruction (362) to the trusted entity server to perform a sale of the at least one security (356) in the client brokerage account (355) according to the confirmed financing suggestion, transmits an authorization of the transaction to the POS payment system (310), to be initially paid by the client payment account (345) and recover from the trusted entity server the proceeds (363) from the sale of the at least one security (356) according to the selected financing suggestion, and apply the proceeds to the client payment account (345).

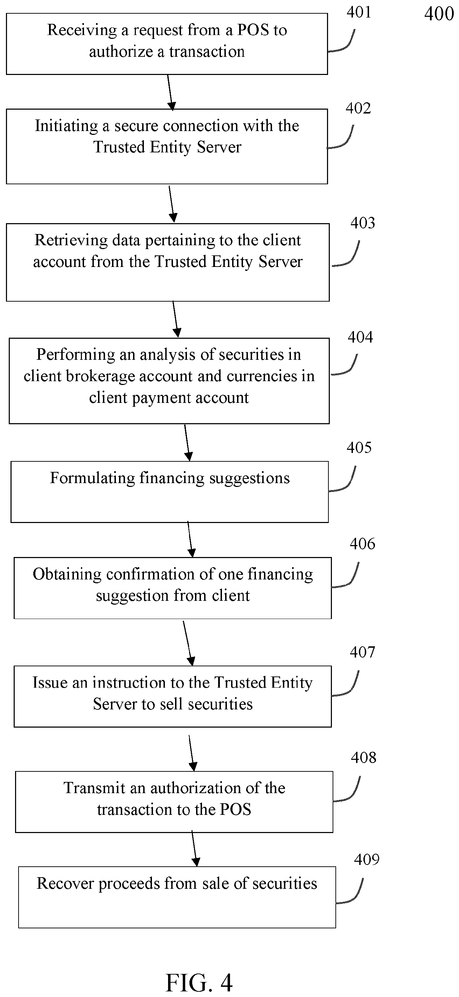

Referring to Figure 4, a method for making payments at a point of sale is illustrated. The method comprising: a computing device having a digital wallet application installed thereon and a user interface, a management server configured to administrate a client payment account comprising at least one currency balance securely accessible via the digital wallet application and a trusted entity server configured to administrate a client brokerage account comprising an at least one security. The client brokerage account and the client payment account are associated with a client. The method comprises the following steps performed by the management server: receiving a request to authorize a transaction of a client initiated at the POS payment system via a computing device (401). In the next stage, the management server initiates a secure connection with the trusted entity server (402). Thereafter, the management server retrieves data pertaining to the client brokerage account from the trusted entity server (403). The data may include information about the securities owned by the client, their current value, the change in their value over time, management fees and the like. The management server then performs an analysis of the securities in the client brokerage account and the currency balance in the client payment account (404) and formulates at least one financing suggestion for financing the transaction by at least one of partial sale of at least one security in the client brokerage account and partial payment using the at least one currency balance in the client payment account (405). The management server then obtains confirmation of one of the at least one financing suggestion, being a confirmed financing suggestion, from the client via the user interface of the computing device (406). After receiving confirmation, the management server issues an instruction to the trusted entity server to perform a sale of the at least one security in the client brokerage account according to the confirmed financing suggestion (407), transmits an authorization of the transaction to the POS payment system, to be initially paid by the client payment account (408) and in the last stage, recover from the trusted entity server the proceeds from the sale of the at least one security according to the selected financing suggestion, and apply the proceeds to the client payment account (409).

The subject matter described above is provided by way of illustration only and should not be construed as limiting. Various modifications and changes can be made to the subject matter described herein without following the example embodiments and applications illustrated and described and without departing from the true spirit and scope of the present invention, which is set forth in the following claims.

## Claims

1. A method for making payments at a point of sale, the method comprising:
a computing device (330), comprising a digital wallet application installed thereon and a user interface;
a management server (340), configured to administrate a client payment account (345) comprising at least one currency balance (346) securely accessible via said digital wallet application; and
a trusted entity server (350), configured to administrate a client brokerage account (355) comprising an at least one security (356);
wherein the client brokerage account and the client payment account are associated with a client (320) and the management server is configured to:
receive a request to authorize a transaction of the client initiated at a POS payment system (310) via the computing device;
initiate a secure connection with the trusted entity server;
retrieve data (361) pertaining to the client brokerage account from the trusted entity server;
perform an analysis of the at least one security in the client brokerage account and the at least one currency in the client payment account;
formulate at least one financing suggestion for financing the transaction by at least one of partial sale of the at least one security in the client brokerage account and partial payment using the at least one currency in the client payment account;
obtain confirmation of one of the at least one financing suggestion, being a confirmed financing suggestion, from the client via the user interface;
issue an instruction (362) to the trusted entity server to perform a sale of the at least one security in the client brokerage account according to the confirmed financing suggestion;
transmit an authorization of the transaction to the POS payment system, to be initially paid by the client payment account; and
recover (363) from the trusted entity server the proceeds from the sale of the at least one security according to the selected financing suggestion, and apply the proceeds to the client payment account.

2. The method of claim 1, wherein at least one of the following is held true:
a. said management server, when formulating said at least one financing suggestion, is configured to consider at least change in value of at least one of said at least one security in said brokerage account over time, estimate a potential change in the current value of said at least one security in said brokerage account, and include in said at least one financing suggestion at least one of said at least one security whose value is estimated to decrease.;
b. at least one of the following: total current value of said at least one brokerage account, current value of each of the at least one security in said at least one brokerage account, type of each of the at least one security, taxes imposed on sale of the at least one security, amount of said transaction, available amount in any other payment method and account associated with said client; and
c. said management server is configured to receive a set of rules (196) from the trusted entity server applying to said sale of the at least one security; and wherein said management server is configured to formulate said at least one financing suggestion in accordance with said set of rules.

3. The method of claim 2, wherein current value and change in value over time of said at least one security included in said at least one financing suggestion are presented to said client via said user interface (140).

4. The method of any one of claims 1 to 3, wherein said user interface (140) allows said client to change the composition of said at least one security to be sold in said at least one financing suggestion.

5. The method of any one of claims 1 to 4, wherein said user interface is provided via a software application (140) installed on said computing device.

6. A system for making payment at a point of sale (POS) comprising:
a computing device, comprising a digital wallet application installed thereon and a user interface;
a management server, configured to administrate a client payment account comprising at least one currency balance (346) securely accessible via said digital wallet application; and
a trusted entity server, configured to administrate a client brokerage account comprising an at least one security (356);
wherein the client brokerage account and the client payment account are associated with a client and
the management server is configured to:
receive a request to authorize a transaction of the client initiated at a POS payment system via said mobile computing device;
initiate a secure connection with the trusted entity server;
retrieve data pertaining to the client brokerage account from the trusted entity server;
perform an analysis of the at least one security in the brokerage account and the at least one currency in the client payment account;
formulate at least one financing suggestion for financing the transaction by at least one of partial sale of the at least one security in the client brokerage account and partial payment using the at least one currency in the client payment account;
obtain confirmation of one of the at least one financing suggestion, being a confirmed financing suggestion, from the client via the user interface;
issue an instruction to the trusted entity server to perform a sale of at least one security in the client brokerage account according to the at confirmed financing suggestion;
transmit an authorization of the transaction to the POS payment system, to be initially paid by the client payment account; and
recover from the trusted entity server the proceeds from the sale of the at least one security according to the selected financing suggestion, and apply the proceeds to the client payment account.

7. The system of claim 6, wherein at least one of the following is held true:
a. said management server, when performing said analysis, is configured to consider at least change in value of said at least one security over time, estimate a potential change in the current value of said at least one security, and include in said at least one financing suggestion at least one of said at least one security whose value is estimated to decrease; and wherein said at least one financing suggestion is presented to and confirmed by said client via said user interface;
b. said management server is configured to allow said client to finance said transaction in part by said sale of at least one security; and pay a remaining amount of said transaction with at least one payment method associated with said client;
c. said management server, when formulating said at least one financing suggestion, is configured to consider at least one of the following: total current value of said at least one brokerage account, current value of each of the at least one security in said at least one brokerage account, type of each of the at least one security, taxes imposed on sale of the at least one security, amount of said transaction, available amount in any other payment method and account associated with said client;
d. said management server is configured to receive a set of rules from said trusted entity server applying to said sale of said at least one security; and wherein said management server is configured to formulate said at least one financing suggestion in accordance with said set of rules;
e. said management server, when performing said analysis, is further configured to:
monitor real-time market trends, including fluctuations in the value of said at least one security in the client brokerage account;
optimize the timing of the sale of said at least one security based on said real-time market trends to maximize financial benefits for the client and minimize transaction costs; and
include in said at least one financing suggestion an optimized recommendation for the timing and selection of said at least one security to be sold, wherein said financing suggestion is presented to and confirmed by the client via said user interface;
f. said management server, when performing said analysis, is further configured to:
aggregate securities from a plurality of brokerage accounts associated with the client, each comprising at least one security;
formulate a consolidated financing suggestion based on the aggregated securities and the at least one currency in the client payment account; and
present said consolidated financing suggestion to the client via said user interface for confirmation, simplifying the transaction process and optimizing the utilization of assets across said plurality of brokerage accounts;
g. said management server, when performing said analysis, is further configured to:
integrate data from external sources, including but not limited to geopolitical events and economic indicators;
refine the at least one financing suggestion by incorporating said external data to ensure the suggestion is contextually informed and strategically aligned with prevailing market conditions; and
present said refined financing suggestion to the client via said user interface for confirmation;
h. said management server, when performing said analysis, is configured to:
evaluate market liquidity for said at least one security in the client brokerage
account prior to executing a sale;
identify potential risks of significant price fluctuations during the sale;
optimize the sale of said at least one security to preserve market stability and achieve favorable financial outcomes for the client; and
incorporate the results of said market liquidity analysis into the at least one financing suggestion presented to and confirmed by the client via said user interface;
i. said management server, when performing said analysis, is configured to:
conduct real-time performance analysis of said at least one security during the execution of the sale, including monitoring trade execution time, tracking price fluctuations, and assessing market response to the transaction;
continuously adjust the execution strategy based on the real-time performance analysis to optimize transaction outcomes for the client; and
incorporate insights from said real-time performance analysis into said at least one financing suggestion presented to and confirmed by the client via said user interface;
j. said management server, when performing said analysis, is configured to:
incorporate a volatility prediction algorithm to estimate future price fluctuations of said at least one security in the client brokerage account;
use said estimated future price fluctuations to assess potential risks and profitability associated with the sale of said at least one security;
include in said at least one financing suggestion at least one of said at least one security whose predicted future price fluctuation indicates a reduced risk or enhanced profitability; and
present said at least one financing suggestion to and confirm it with said client via said user interface;
k. wherein said management server, when performing said analysis, is configured to:
dynamically calculate transaction costs, including brokerage fees and potential penalties, associated with the sale of said at least one security in the client brokerage account;
adjust said at least one financing suggestion to account for said calculated transaction costs, ensuring that said at least one financing suggestion is optimized for profitability and cost-effectiveness; and
present said adjusted at least one financing suggestion to and confirm it with said client via said user interface;
l. said management server, when performing said analysis, is configured to:
utilize an artificial intelligence engine to analyze the client's historical transaction data and current market trends;
generate financing suggestions tailored to the client's financial profile and objectives based on said analysis; and
present said tailored financing suggestions to and confirm them with said client via said user interface;
m. said management server, when performing said analysis, is configured to:
analyze the client's available resources, including at least one security in said client brokerage account and additional assets of value selected from the group consisting of funds in a bank account, credit card balances, cryptocurrency holdings, and other liquid assets;
formulate a hybrid financing suggestion for the transaction, wherein said hybrid financing suggestion allocates portions of the transaction cost to be covered by the sale of said at least one security and by said additional assets of value; and
present said hybrid financing suggestion to and confirm it with said client via said user interface;
n. said management server, when performing said analysis, is configured to consider at least one of the value of the at least one currency in the client payment account and change in the value of the at least one currency in the client payment account; and
o. said management server, when formulating said analysis, is configured to consider at least change in value of at least one of said at least one currency in said client payment account over time, estimate a potential change in the current value of said at least one currency in said payment account, and include in said at least one financing suggestion at least one of said at least one currency whose value is estimated to decrease.

8. The system of claim 7, wherein the current value and a change in value over time of said securities included in said at least one financing suggestion are presented to said client via said user interface.

9. The system of any one of claims 6 to 8, wherein at least one of the following is held true:
a. said user interface allows said client to change the composition of said securities to be sold in said at least one financing suggestion; and
b. said user interface is provided via a software application installed on said computing device.
